# EUROPEAN PATENT SPECIFICATION

(11) **EP 4 075 740 B1**
(45) Date of publication and mention of the grant of the patent: **05.03.2025**
(21) Application number: 21168333.9
(22) Date of filing: 14.04.2021
(51) Int. Cl.: H04L 45/00, H04L 45/7453, H04L 45/745

(54) **EXTENDING BEST MATCH LOOKUP ALGORITHM WITH ONE OR MORE CONDITIONALLY EXECUTED EXACT MATCH LOOKUPS**
ERWEITERUNG DES BESTEN ÜBEREINSTIMMUNGSSUCHALGORITHMUS MIT EINER ODER MEHREREN BEDINGT AUSGEFÜHRTEN GENAUEN ÜBEREINSTIMMUNGSSUCHEN
ALGORITHME DE RECHERCHE DE LA MEILLEURE CORRESPONDANCE ÉTENDUE AVEC UNE OU PLUSIEURS RECHERCHES DE CORRESPONDANCE EXACTE EXÉCUTÉES SOUS CONDITION

(43) Date of publication of application: 19.10.2022
(73) Proprietor: NXP B.V., 5656 AG Eindhoven (NL)
(72) Inventor: ST-DENIS, Bernard Francois, Redhill, RH1 1QZ (GB); PILLAR, John, Redhill, RH1 1QZ (GB); HARDMAN, James Lancelot, Redhill, RH1 1QZ (GB)
(74) Representative: Miles, John Richard

(56) References cited:
- US-A1- 2015 127 900
- US-A1- 2016 134 536
- US-A1- 2021 067 448
- US-B1- 10 318 587

## Description

### BACKGROUND

The present specification relates to computer implemented methods and integrated circuits for determining a best match for an input, using a Ternary Content Addressable Memory (TCAM) table and at least one exact match (EM) table.

A ternary best match algorithm typically requires the use of Ternary Content Addressable Memory (TCAM or Ternary CAM). This is a specialist type of CAM. Generally speaking, CAM can be described as the opposite of random access memory (RAM). To retrieve data from RAM, the operating system must provide the memory address where the data is stored. In comparison, data stored on CAM can be accessed by performing a look-up for the content itself, and the memory retrieves the addresses where that data can be found. As such, the time taken to find matching data is much faster using CAM and TCAM compared to RAM. However, TCAM is a scarce hardware resource that is expensive to build and consumes a lot of power. As such, TCAM tends to be small and use of the TCAM must be carefully managed.

An exact match hash based algorithm usually does not require the use of a specialised memory, such as TCAM. Therefore, an exact match algorithm can make use of cheaper, more abundant memory.

US 2016/134536 A1 describes a hybrid wildcard match table.

### SUMMARY

Aspects of the present disclosure are set out in the accompanying independent and dependent claims.

According to a first aspect of the present disclosure, there is provided a computer-implemented method of determining a best match for an input according to claim 1.

Each TCAM entry comprises a key and a mask of identical size to the key. It will be appreciated that TCAM is an industry standard that the skilled person would be familiar with. Each TCAM entry has an associated precedence value and output result, which are not stored in the TCAM table itself.

Thus, the present disclosure provides a best match algorithm that makes efficient use of TCAM memory by migrating at least one set of entries, that have the same TCAM mask value, from the TCAM memory to at least one exact match table. Thus, the ternary best match lookup is extended with one or more conditionally executed exact match lookups. This allows for a reduction in TCAM required, which reduces manufacturing costs and power consumption.

The present disclosure is also not limited in terms of what kind of data can be contained in the TCAM table or the exact match table.

Each TCAM entry is assigned a precedence value which is compared to the precedence value assigned to each exact match table. The precedence values are stored in an associated memory (not the TCAM).

Each entry in the TCAM table (i.e. each TCAM key and mask) has an associated index value. By convention, the entries are stored in the TCAM table in order of lowest index value to highest index value. A best match TCAM entry is defined as the matching TCAM entry which has the lowest index value.

The precedence value assigned to each TCAM entry is preferably allocated based on the index values, such that the entries in the TCAM table are also ordered from lowest precedence to highest precedence. Thus, the best match TCAM entry may also be the matching TCAM entry with the lowest (or equal lowest) precedence value.

The person skilled in the art will appreciate that there are a number of methods for generating a TCAM lookup key and an exact match lookup key from an input.

The output result associated with each TCAM entry and the output result associated with each exact match key may comprise instructions detailing how to respond to or process the input. For example, the output result may comprise forwarding instructions, rate police instructions, instructions to keep or discard the input, etc. As such, in addition to identifying the best match for an input, the present disclosure may return an output result indicating what action should be taken in response to the input (i.e. how the input should be treated).

The method may further comprise providing a plurality of exact match tables, wherein each exact match key stored in the plurality of exact match tables has an associated output result, and each exact match table is assigned a precedence value.

Each exact match table comprises a set of data entries that could be contained in the TCAM table. If the exact match entries from a given exact match table were contained in the TCAM table then they would each have the same mask value. Therefore, the precedence value assigned to the exact match table may be determined by where the exact match entries would be positioned in the TCAM table relative to the TCAM entries.

For example, if two exact match tables are provided, then the precedence value assigned to the TCAM entries may range from 0 to 2. Optionally, the precedence value of a first exact match table may be 0, and the precedence value of a second exact match table may be 1.

If a plurality of exact match tables are provided, the method may comprise comparing the precedence value of the best match TCAM entry to the precedence value of each exact match table.

In response to determining that the precedence value of one of the plurality of exact match tables is less than the precedence value of the best match TCAM entry, an exact match lookup process may be carried out for that exact match table. If no matching exact match key is identified, the method may include returning the output result associated with the best match TCAM entry as the best match. If a matching exact match key is identified, the method may include returning the output result associated with the matching exact match key as the best match.

The TCAM lookup key may comprise a plurality of fields selected from the input. The exact match lookup key may comprise at least one field selected from the input.

In some embodiments, the exact match lookup key may be a subset of the fields used to construct the TCAM lookup key.

If a plurality of exact match tables are provided, the exact match lookup key generated for each exact match table may not be the same. In some embodiments, a different exact match lookup key may be generated for each exact match table (from the same input).

For example, a first exact match lookup key may be generated for a first exact match table comprising fields {x, y} and a second exact match lookup key may be generated for a second exact match table comprising fields {w, y, z}. The number of fields contained in each exact match lookup key may not be the same.

Optionally, in response to determining that the precedence value of two or more of the plurality of exact match tables is less than the precedence value of the best match TCAM entry, the method comprises determining which of the two or more exact match tables has the lowest precedence value. An exact match lookup process may be carried out for the exact match table with the lowest precedence value by: generating a first exact match lookup key from the input, for the exact match table with the lowest precedence value; and using the first exact match lookup key to determine if a matching exact match key is contained in the exact match table with the lowest precedence value.

In response to no matching exact match key being identified in the exact match table with the lowest precedence value, the method may include repeating the exact match lookup process for each of the two or more exact match tables in order of lowest precedence value to highest precedence value until a matching exact match key is identified.

If a matching exact match key is identified, the method may include returning the output result associated with the matching exact match key as the best match.

If no matching exact match key is identified in the two or more exact match tables, the method may include returning the output result associated with the best match TCAM entry as the best match.

In response to determining that the precedence value of the best match TCAM entry is less than the precedence value of the, or each, exact match table, the output result associated with the best match TCAM entry may be returned as the best match.

Optionally, if no best match TCAM entry is identified and no matching exact match key is identified then a default output result may be returned.

Optionally, the TCAM table may comprise a default entry having an associated default output result. The default entry may be assigned the highest precedence value, such that the default entry is determined to be the best match TCAM entry if no matching TCAM entry having a lower precedence value is identified.

The default entry may be a match-all TCAM entry wherein all bits are masked, such that any TCAM lookup key generated will match at least with the default entry. This ensures that an output result is always returned.

Thus, the precedence value of the default entry may be higher than the precedence value of all of the plurality of TCAM entries and also higher than the precedence value of each exact match table.

The method may include the step of assigning the precedence value to each TCAM entry stored in the TCAM table.

The method may include the step of assigning the precedence value to the, or each, exact match table.

According to a second aspect of the present disclosure, there is provided a non-transitory computer-readable medium comprising executable instructions to cause one or more processors to perform the method of any embodiment or example of the first aspect of the invention.

Optionally, the computer-readable medium may be a Universal Serial Bus (USB) flash drive, a memory stick, a Blu-ray/DVD/CD-ROM drive, a memory card, and/or other like computer-readable storage medium.

According to a third aspect of the present disclosure, there is provided an integrated circuit, comprising: a processor; and memory, the memory configured to store: a Ternary Content Addressable Memory, TCAM, table, configured to store a plurality of TCAM entries, wherein each TCAM entry has an associated output result and each TCAM entry is assigned a precedence value; and an exact match table, wherein the exact match table is configured to store a plurality of exact match keys, wherein each exact match key has an associated output result and the exact match table is assigned a precedence value; and a set of executable instructions to cause the processor to perform a method according to claim 7.

Specifically, the method comprises receiving the input, generating a TCAM lookup key from the input, performing a TCAM lookup using the TCAM lookup key to determine a best match TCAM entry in the TCAM table, comparing the precedence value of the best match TCAM entry to the precedence value of the exact match table. In response to determining that the precedence value of the exact match table is less than the precedence value of the best match TCAM entry, the method includes performing an exact match lookup process, including generating an exact match lookup key from the input, and using the exact match lookup key to determine if a matching exact match key is contained in the exact match table. If no matching exact match key is identified, the output result associated with the best match TCAM entry is returned as the best match, and if a matching exact match key is identified, the output result associated with the matching exact match key is returned as the best match.

As explained above, the best match TCAM entry is defined as the matching TCAM entry with the lowest index value in the TCAM table.

Optionally, the best match TCAM entry may be the matching TCAM entry having the lowest (or equal lowest) precedence value.

Each TCAM entry comprises a key and a mask having an identical size to the key. Each TCAM entry has an associated precedence value and an associated output result.

Optionally, the memory may comprise a plurality of exact match tables, wherein each exact match key stored in the plurality of exact match tables has an associated output result, and each exact match table is assigned a precedence value.

The executable instructions may cause the processor to compare the precedence value of the best match TCAM entry to the precedence value of each exact match table. In response to determining that the precedence value of one of the plurality of exact match tables is less than the precedence value of the best match TCAM entry, the processor performs an exact match lookup process for the exact match table, as described above.

In response to determining that the precedence value of two or more of the plurality of exact match tables is less than the precedence value of the best match TCAM entry, the processor may: determine which of the two or more exact match tables has the lowest precedence value; and perform an exact match lookup process by generating a first exact match lookup key from the input, for the exact match table with the lowest precedence value; and using the first exact match lookup key to determine if a matching exact match key is contained in the exact match table with the lowest precedence value.

If no matching exact match key is identified, the processor may repeat the exact match lookup process for each of the two or more exact match tables in order of lowest precedence value to highest precedence value until a matching exact match key is identified.

If a matching exact match key is identified, then the output result associated with the matching exact match key may be returned. If no matching exact match key is identified in the two or more exact match tables, the output result associated with the best match TCAM entry may be returned.

Optionally, in response to determining that the precedence value of the best match TCAM entry is less than the precedence value of the, or each, exact match table, the output result associated with the best match TCAM entry may be returned as the best match.

The memory may comprise a default output result, wherein if no best match TCAM entry is identified and no matching exact match key is identified then the default output result is returned.

Optionally, the TCAM table comprises a default entry having an associated default output result. The default entry may be assigned the highest precedence value, such that the default entry is determined to be the best match TCAM entry if no matching TCAM entry having a lower precedence value is identified.

The default entry may be a match-all TCAM entry, wherein all bits are masked. This may ensure that any TCAM lookup key generated matches at least with the default entry. The default entry may have a higher precedence value than the precedence value of the other TCAM entries and also higher than the precedence value of each of the exact match tables.

Optionally, the output results associated with each TCAM entry, and the output results associated with each exact match key, all have the same format.

The output results associated with each TCAM entry may be stored in an accompanying memory and associated with the respective TCAM entry. The accompanying memory may be RAM.

Optionally, the precedence values assigned to each TCAM entry are stored in an accompanying memory and associated with the respective TCAM entry. The accompanying memory may be RAM.

The output results associated with each exact match entry may be stored in the exact match table.

The output result associated with each TCAM entry and each exact match key may comprise instructions detailing how to respond to or process the input. For example, the output result may comprise forwarding instructions, rate police instructions, instructions to keep or discard the input, etc.

Optionally, the input comprises a frame and metadata.

Optionally, the integrated circuit may form part of a networking device, such as a high-performance router or switch.

The input may be an ethernet frame. However, it will be appreciated that the input could be any input for which a ternary match is desired.

### BRIEF DESCRIPTION OF THE DRAWINGS

Illustrative embodiments of this disclosure will be described hereinafter, by way of example only, with reference to the accompanying drawings in which like reference signs relate to like elements and in which:
**Figure 1** - is a schematic representation of an integrated circuit according to an embodiment of the present disclosure;
**Figure 2****-** is a logical view of a TCAM table and associated data, a first exact match table and a second exact match table in accordance with an embodiment of the present disclosure; and
**Figure 3** - is an illustration of a best match process flow in accordance, based on the tables shown in Figure 2.

### DETAILED DESCRIPTION

### Ternary Content Accessible Memory (TCAM)

A simplified example of a standard TCAM table according to the prior art is shown below in Table 1. It will be appreciated that the TCAM table can comprise any number of entries. Each TCAM entry comprises a key, K_{T}, a mask of identical size to the key, M_{T}, an output result R_{T}. Each row in Table 1 may be referred to as a TCAM entry. It will be appreciated that only the keys K_{T} and masks M_{T} are stored in the TCAM table in the TCAM memory. The output result R_{T} associated with each TCAM key and mask are generally stored in an accompanying memory associated with the TCAM table. The accompanying memory may be RAM. Each TCAM entry is assigned an index (e.g. TCAM index) from 0 to n. Each TCAM entry is added to the TCAM table at a specific index. The TCAM is of a fixed size that limits the number of index values available. The TCAM entries are ordered in the TCAM table from the lowest index value to the highest index value.

**Table 1: Standard TCAM table and associated data**

| Index | **Key (K_{T})** | **Mask (M_{T})** | | **Result (R_{T})** |
|---|---|---|---|---|
| 0 | K_{T1} | M_{T1} | | R_{T1} |
| ... | ... | ... | | ... |
| a | K_{T2} | M_{T2} | | R_{T2} |
| *a+1* | *K_{T11}* | *M₁* | | *R_{T11}* |
| ... | ... | *M₁* | | ... |
| *b* | *K_{T12}* | *M₁* | | *R_{T12}* |
| b+1 | K_{T3} | M_{T3} | | RT3 |
| ... | ... | ... | | ... |
| *c* | K_{T4} | M_{T4} | | R_{T4} |
| *c+1* | *K_{T21}* | *M2* | | *R_{T21}* |
| ... | ... | *M2* | | |
| *d* | *K_{T22}* | *M2* | | *R_{T22}* |
| d+1 | K_{T5} | M_{T5} | | R_{T5} |
| ... | ... | ... | | ... |
| n | K_{T6} | M_{T6} | | R_{T6} |

The key is the bit pattern that is to be matched. The mask refers to the mask bits associated with the key. In other words, the TCAM mask is used to determine which bits in each fields in the key (K_{T}) must be matched with a lookup Key. A mask bit value of 0 means a 'don't care' (that is, a bit value of 0 or 1 in the lookup Key is considered a match). A mask bit value of 1 means the corresponding bit in the TCAM Key (K_{T}) must match with the lookup Key's bit.

An example of an enhanced TCAM table and associated data according to the present disclosure is shown below in Table 2. As shown, each TCAM entry comprises a key, K_{T}, a mask of identical size to the key, M_{T}, an output result R_{T} and a precedence value P_{T}. Each row in Table 2 may be referred to as a TCAM entry. Only the keys K_{T} and masks M_{T} are stored in the TCAM table in the TCAM memory. The output result R_{T} and the precedence value P_{T} associated with each TCAM key and mask are stored in an accompanying memory associated with the TCAM table. The accompanying memory may be RAM. Logically, the TCAM entry can be considered to comprise both the TCAM memory data and the accompanying memory data.

**Table 2: Example of a TCAM table and associated data**

| Index | **Precedence (P_{T})** | | **Key (K_{T})** | **Mask (M_{T})** | | **Result (R_{T})** |
|---|---|---|---|---|---|---|
| 0 | 0 | | K_{T1} | M_{T1} | | R_{T1} |
| ... | 0 | | ... | ... | | ... |
| x | 0 | | K_{T2} | M_{T2} | | R_{T2} |
| x+1 | 1 | | K_{T3} | M_{T3} | | RT3 |
| ... | 1 | | ... | ... | | ... |
| y | 1 | | K_{T4} | M_{T4} | | R_{T4} |
| y+1 | 2 | | K_{T5} | M_{T5} | | R_{T5} |
| ... | 2 | | ... | ... | | ... |
| z | 2 | | K_{T6} | M_{T6} | | R_{T6} |

The output result R_{T} may indicate the result or action that occurs in the case where a lookup returns a hit for the pattern and mask. In some embodiments, the output result may comprise an index that refers to an ingress stream table (described below).

As explained above, The TCAM entries are stored in the TCAM table in order from the lowest index to the highest index. In the present disclosure, each TCAM entry is associated with a precedence value P_{T}. The precedence value assigned to a TCAM entry is determined based on the index, so that the TCAM entries are also stored in order of lowest precedence value to highest precedence value. The lowest precedence value is defined as the precedence value closest to zero. It will be appreciated that the precedence values are not limited to 0, 1 and 2 as shown in Table 2. This is just one example of possible precedence values that may be used.

To perform a best match search for an input, a TCAM lookup key is generated from the input. The TCAM lookup key comprises a plurality of fields selected from the input, each field comprising a plurality of bits. The TCAM lookup key has the same format as each TCAM key stored in the TCAM table.

A TCAM lookup (or ternary best match lookup) is then executed by comparing the TCAM lookup key to each Key K_{T} in the table, wherein the corresponding mask M_{T} is applied to determine whether the bits identified by a '1' in the lookup key match the corresponding bits in the Key K_{T}. If there is a match between these bit values, then the TCAM entry is identified as a matching TCAM entry. If there are multiple matching TCAM entries for a given lookup key, then the matching TCAM entry with the lowest index value (i.e. closest to the first row of the TCAM table) is identified as the best match TCAM entry. The precedence value P_{T} is not relied on to determine the best match TCAM entry. Instead, the precedence value is used to determine whether an exact match lookup is required.

### Exact Match Tables

In the precent disclosure, rather than all of the data being contained in a TCAM table, at least one exact match table is also provided. An exact match table does not have to be stored in specialised memory such as TCAM. Thus, an exact match table is cheaper to store and also the associated memory consumes less power than a table of equivalent size stored in TCAM.

Table 3 shows a logical view of a first exact match table (EM Table 1) and Table 4 shows a logical of a second exact match table (EM Table 2) according to the present disclosure. In the present disclosure, a set of TCAM entries having the same mask value can be stored in an exact match table (like Table 3) rather than in the TCAM table (e.g. Table 2). It will be appreciated that the exact match tables can comprise any number of entries, and any number of exact match tables may be provided.

A comparison between Table 1 and Table 2 above shows that the entries in italics in Table 1 (also having a thicker box border) are not present in Table 2. This is because these entries have a common mask value and so this data has been relocated into EM table 1 and EM table 2, to reduce the size of TCAM Table.

**Table 3: example of an exact match table (EM Table 1)**

| **Precedence Value (P_{E1}) = 0** | |
|---|---|
| **Key (K_{E1})** | **Result (R_{E1})** |
| K₁₁ | R_{T11} |
| ... | ... |
| K₁₂ | R_{T12} |

**Table 4: example of an exact match table (EM Table 2)**

| **Precedence Value (P_{E2}) = 1** | |
|---|---|
| **Key (K_{E2})** | **Result (R_{E2})** |
| K₂₁ | R_{T21} |
| ... | ... |
| K₂₂ | R_{T22} |

As shown in Table 3 and Table 4, in the present disclosure all entries in an exact match table are assigned the same precedence value P_{E1}. The Exact Match table comprises a plurality of exact match keys K_{E1}, each exact match key having an associated output result R_{E1}.

The output result R_{E1} may indicate the result or action that occurs in the case where a lookup returns a match for that exact match Key K_{E1}. In some embodiments, the output result may comprise an index that refers to an ingress stream table (described below) that contains data defining the action to be taken.

The precedence value P_{E1} of the exact match table may be assigned based on the precedence values assigned to the TCAM entries, or vice versa. The TCAM precedence value P_{T} is defined relative to the exact match table and therefore less memory (in the associated memory) is required per TCAM entry to store the TCAM precedence.

In this embodiment, the data contained in Table 3 would, if contained in the TCAM table (i.e. Table 2), have a lower index and lower precedence value than TCAM key KT3 (see the relative positions in Table 1). Thus, in this example, EM Table 1 is assigned a precedence value of 0. The data contained in Table 4 would, if contained in the TCAM table (i.e. Table 2), have a lower index and lower precedence value than TCAM key KT5 (see the relative positions in Table 1). Thus, in this example, EM Table 2 is assigned a precedence value of 1.

In a possible implementation, the precedence value P_{E1} is defined relative to one of the TCAM table entry's index.

In an exact match lookup process, an exact match lookup key is generated from the input. The exact match lookup key has the same format as each of the exact match keys K_{E1} stored in the exact match table. The exact match lookup key comprises at least one field, each field comprising a plurality of bits. Optionally, the exact match lookup key may comprise a subset of fields contained in the TCAM lookup key. If a plurality of exact match tables are provided, the exact match lookup key for each exact match table may not be the same. In some embodiments, a different exact match lookup key may be generated for each exact match table (from the same input).

The exact match lookup key is then compared to each of the exact match keys K_{E1} stored in the exact match table. Unlike a TCAM table, there are no masks stored in the exact match table. This means that for a lookup key to match one of the exact match keys K_{E1}, all of the bits in each field of the exact match lookup key must be identical to the corresponding bits in each field of the exact match key K_{E1} (hence, exact match).

### Specific Example of Lookup Key Generation

In some embodiments, the input may comprise a frame and metadata. The frame may comprise a plurality of data fields (or fields). In this specific embodiment, the present disclosure forms part of a networking device and the input comprises an ethernet frame or data packet.

In an Ethernet network, a traffic stream may be defined using combination of receive port plus a set of fields within the received ethernet frame (or data packet) which include MAC destination address (MAC DA), MAC source address (MAC SA), VLAN, IP source address (IP SA), IP destination address (IP DA), etc. The best match TCAM lookup and/or the exact match lookup process described above can be used to identify the stream. The process of finding the best match for the input (ingress stream) can be referred to as ingress stream identification.

The TCAM lookup key is constructed from a selection of the plurality of data fields contained in the input ethernet frame, and one or more other fields (for example extracted from the metadata). For example, the TCAM lookup key may comprise {receive port(4), MAC DA(48), MAC SA(48), VLAN(12), IP SA(128), IP DA(128)}. The receive port represents the receive port in the network device. The number in brackets () indicates the field size in bits. Thus, in this example the TCAM Lookup key is 368 bits long. The TCAM lookup key has the same format and is the same size as each of the TCAM keys stored in the TCAM table (i.e. the same fields are used). It will be appreciated that in practice the TCAM lookup key and TCAM keys are typically much longer than this.

Each exact match lookup key (and thus also each exact match key) may be constructed from a subset of the fields used in the TCAM keys and TCAM lookup key. However, this is not an essential requirement. In other embodiments, the exact match keys may comprise one or more fields not contained in the TCAM keys.

For example, a first exact match lookup key and a corresponding first set of exact match keys may comprise the fields {receive port(4), MAC DA(48),VLAN(12)}, which is 64 bits long. This subset of fields may comprise hundreds of data entries. According to prior art systems, all of these data entries would be added to the TCAM table, with the other data fields being masked. However, according to the present disclosure, these entries can instead be contained in an exact match table, allowing for a reduction in TCAM usage (e.g. as shown in EM Table 1 in Table 3).

Optionally, a second exact match table may be provided, wherein the second exact match keys have a different format to the first exact match keys (e.g. as shown in EM Table 2 in Table 4). For example, the second exact match keys may comprise the fields {receive port(4), MAC SA(48)}. Thus, to generate the second exact match lookup key from the input, the fields {receive port, MAC SA} would be extracted from the input data packet and metadata. The precedence value of the second exact match table is different to the precedence value of the first exact match table. Optionally, the second exact match table may be defined as having a higher precedence value than the first exact match table (i.e. the exact match tables may be stored in order of precedence, from low to high precedence).

### Ingress Stream Table or Output Results Table

In addition to identifying the ingress stream (i.e. determining the best match for an input) the present disclosure returns an output result associated with the best match or exact match. The output result indicates what action should be taken in response to the input (i.e. how the input should be treated).

As shown in Tables 2 to 4, each TCAM entry and each exact match entry has an associated output result. As detailed above, the output results associated with each TCAM entry are stored in an associated memory rather than the TCAM. The output result may comprise instructions indicating what action should be taken in response to the input that has been identified. In the specific example of the networking device, the output results R_{E1}, R_{E2}, R_{T}, may comprise instructions for how to treat the received ethernet frame, such as: discard, keep, forward to a specific destination, rate police, etc. However, it will be appreciated that, as the present disclosure could be used with any kind of data, the output result may take any form.

In other embodiments, the output results associated with the TCAM table and the exact match tables may comprise or consist of an index to an entry stored in another table. This other table may be referred to as an output results table, or an ingress stream table. The ingress stream table may comprise a plurality of entries, each entry corresponding to an output result. Thus, when the best match or exact match has been identified, the associated index allows an entry to be looked-up (or retrieved) from the ingress stream table.

In the specific example of a networking device, each entry in the ingress stream table may comprise or consist of configuration data indicating how to treat the input ethernet frame identified by this stream (e.g. rate police, forward to specific destination, discard, etc...).

Optionally, each output result R_{E1}, R_{E2}, R_{T} may comprise an index to a unique entry in the ingress stream table. In other embodiments, multiple output results R_{E1}, R_{E2}, R_{T} may comprise the same index, such that a single entry in the ingress stream table can be associated with multiple TCAM entries and/or multiple exact match keys.

### Description of the Figures

Embodiments of this disclosure are described in the following with reference to the accompanying drawings. It will be appreciated that the drawings are schematic illustrations and are not drawn to scale.

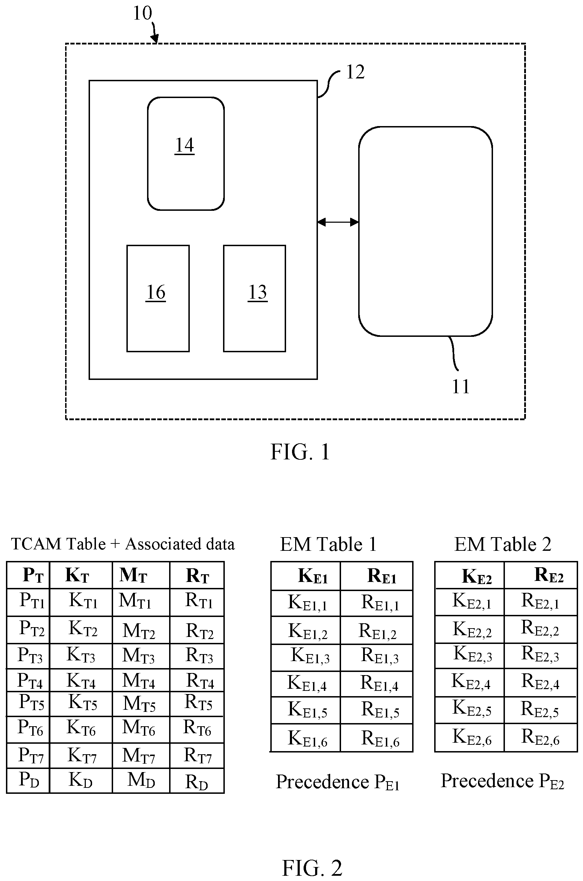

Figure 1 is a simplified representation of an integrated circuit 10 according to an embodiment of the present disclosure. The integrated circuit 10 comprises a processor 11 and memory 12. It will be appreciated that the processor 11 may represent a plurality of processors or microprocessors, rather than a single processor. There is a two-way communication channel between the processor 11 and the memory 12, as indicated by the arrow in Figure 1.

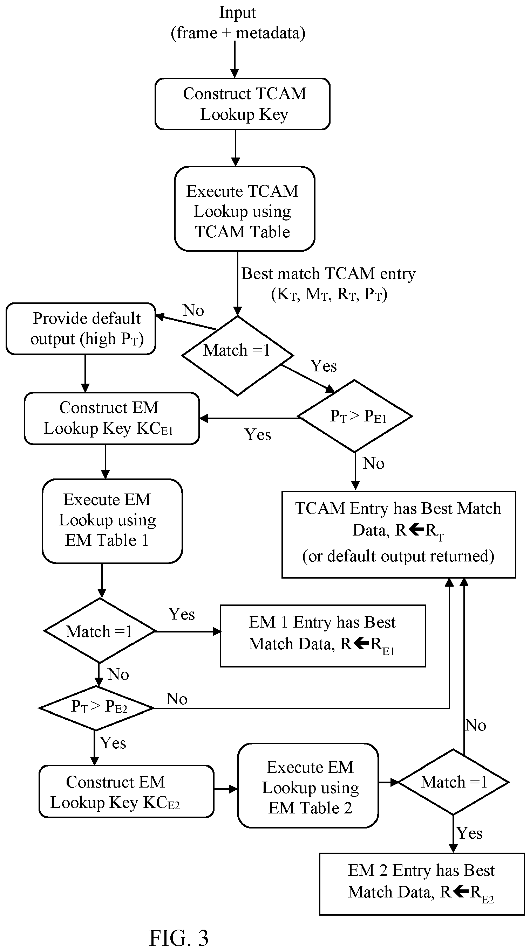

Memory 12 comprises a set of executable instructions 13 that cause the processor 11 to perform a method to determine a best match for an input (see Figure 3).

Memory 12 also comprises a Ternary Content Accessible Memory (TCAM) 14, wherein the TCAM comprises a TCAM Table (e.g. the TCAM keys and masks as represented in Table 2). The memory 12 also comprises a second portion 16, which is not TCAM memory. The second portion 16 of the memory may store the precedence values P_{T} and the output results R_{T} associated with each TCAM entry in the TCAM table. The second portion 16 of the memory is also configured to store at least one exact match table (e.g. as represented in Table 3 and Table 4) and optionally an ingress stream table (output result table). In some embodiments, the executable instructions 13 may be stored in the second portion 16 of the memory 12. The second portion 16 of the memory 12 may be software (e.g. network element's main memory), or RAM.

Figure 2 is a representation of a TCAM table, a first exact match table (EM Table 1) and a second exact match table (EM Table 2). It will be appreciated that in some embodiments only a single exact match table may be provided. In other embodiments, more than two exact match tables may be provided. The tables are not shown populated with rows or data for simplicity. As explained above, any kind of data may be contained in the tables and the tables may be of any size.

The TCAM table may be as detailed in Table 2 above. For convenience, the TCAM index values are not shown in the TCAM Table in Figure 2. Each entry in the TCAM table comprises a key K_{T}, a mask of identical size to the key M_{T}, an output result R_{T} and a precedence value P_{T}.. Optionally, each output result R_{T} may be an index to an entry in an ingress stream table. Each entry in the TCAM table may be assigned a difference precedence value P_{T}, wherein the entries are ordered in the table from lowest precedence value to highest precedence value. The precedence value may range from 0 (lowest precedence value) to n (highest precedence value).

In the TCAM Table shown in Figure 2, the final entry in the table (i.e. the entry with the highest index and highest precedence value) is a default entry. The default entry is a match-all TCAM entry wherein all bits are masked, such that any TCAM lookup key generated will match at least with the default entry. Thus, the default mask, M_{D}, has a value of 0 for each bit of the Key K_{D}. This ensures that there is always an output result returned. The precedence P_{D} of the default entry is higher than P_{E1} and P_{E2}, the precedence values of the exact match tables.

The first exact match table, EM Table 1, comprises a plurality of exact match keys K_{E1}, each key having an associated output result R_{E1}. Each output result R_{E1} may be an index to an entry in an ingress stream table. All entries in EM Table 1 are assigned the same priority value, P_{E1}.

The second exact match table, EM Table 2, comprises a plurality of exact match keys K_{E2}, each key having an associated output result R_{E2}. Each output R_{E2} may be an index to an entry in an ingress stream table. All entries in EM Table 2 are assigned the same priority value, P_{E2}. P_{E2} is not the same as P_{E1}. In this embodiment, P_{E2} is higher than P_{E1}, as explained below in connection with Figure 3.

The format of the output results R_{T}, R_{E1}, R_{E2}, may be identical.

An embodiment of a method for determining a best match for an input is shown in the flow chart in Figure 3. Firstly, the input is received. The input may comprise a frame and metadata. In the specific example of a networking device, the input may comprise a received ethernet frame and metadata.

A TCAM lookup key is then constructed from the input, by selecting a predetermined plurality of fields from the input. This is described in detail in the section "Specific Example of Lookup Key Generation" above. The TCAM lookup key has the same format (i.e. same fields and same size) as the TCAM keys K_{T} in the TCAM Table (e.g. see Figure 2). The processor 11 then executes a TCAM lookup process, by comparing the TCAM lookup key to each TCAM Key K_{T}, wherein the corresponding mask M_{T} is applied to determine whether the bits identified by a '1' in the TCAM lookup key match the corresponding bits in the Key K_{T}. If there is a match between these bit values, the entry in the TCAM table is identified as a matching TCAM entry (i.e. match =1). If there are multiple matching TCAM entries for a given lookup key, then the matching TCAM entry with the lowest TCAM index (i.e. located closest to the first row in the TCAM table) is identified as the best match TCAM entry.

If the TCAM Table comprises a match-all default entry {P_{D}, K_{D}, M_{D}, R_{D}} as shown in Figure 2, then there is always at least one matching TCAM entry, so match =1 is always yes. In other embodiments, a best match TCAM entry may not be identified. If no matching TCAM entry is identified, and the TCAM Table does not comprise a match-all default entry, then a default output may be provided. The default output has the highest precedence value (P_{T}). The default output may indicate what action should be taken in the event of no matching entry being identified in either the TCAM table or the exact match tables.

If a best match TCAM entry is identified (which may be the default entry), the precedence value of the best match TCAM entry P_{T} is compared to the precedence value of the exact match tables EM Table 1 and EM Table 2. If the best match TCAM entry has a precedence value that is less than or equal to the lowest precedence exact match table, in this example EM Table 1 (i.e. P_{T} ≤ P_{E1}) then the best match TCAM entry is the best match, and the result R_{T} associated with this entry is returned. As explained above, R_{T} may be an index to an entry in an ingress stream table that may comprise instructions indicating how to respond to the input identified by the best match TCAM entry.

Alternatively, if EM Table 1 has a precedence value that is lower than the precedence value of the best match TCAM entry (i.e. P_{T} > P_{E1}), then the processor 11 constructs a lookup key KC_{E1} for EM Table 1. This is also the next step in the process in the event of a default output being provided (i.e. no matching TCAM entry). This step is described in detail in the section "Specific Example of Lookup Key Generation" above. The exact match lookup key KC_{E1} has the same format (i.e. same fields and same size) as the exact match keys K_{E1} in EM Table 1 (e.g. see Figure 2).

An exact match lookup process is then executed, by comparing the lookup key KC_{E1} with the EM keys K_{E1} to see if a matching key K_{E1} can be identified. The exact match process may use a hashing algorithm. Various suitable exact match algorithms are well known in the prior art and so are not described in detail here.

If a matching exact match key K_{E1} is contained in EM Table 1, then EM Table 1 contains the best match data and the output result R_{E1} associated with the matching key K_{E1} is returned. As explained above, in some embodiments, R_{E1} may be an index to an entry in an ingress stream table. The output result R_{E1} may define or comprise instructions or configuration data indicating how to respond to the input identified by the exact match key.

If a matching exact match key K_{E1} is not contained in EM Table 1 (i.e. no match is found) then the exact match table having the next highest precedence value is considered, which in this example is EM Table 2 having precedence P_{E2}. The precedence value of the best match TCAM entry, or the default output, P_{T} is compared to the precedence value P_{E2}. If the best match TCAM entry, or the default output, P_{T} has a lower or equal precedence value (P_{T} ≤ P_{E2}), then the best match TCAM entry is determined to be the best match, or the default output is returned if no TCAM match was found.

If the EM Table 2 has a precedence value that is less than the precedence value of the best match TCAM entry, or the default output (i.e. P_{T} > P_{E2}), then the processor 11 constructs a lookup key KC_{E2} for the second exact match table, EM Table 2. The process for constructing KC_{E2} is not necessarily the same as the process for constructing KC_{E1}. In other words, KC_{E2} may have a different format to KC_{E1} and may be constructed from different fields, and have a different size. The exact match lookup key KC_{E2} has the same format (i.e. same fields and same size) as the exact match keys K_{E2} in EM Table 2.

A second exact match lookup process is then executed, by comparing the lookup key KC_{E2} with the EM keys K_{E2} to see if a matching key K_{E2} can be identified. The exact match process may use a hashing algorithm.

If a matching exact match key K_{E2} is contained in EM Table 2, then EM Table 2 contains the best match data and the output result R_{E2} associated with the matching key K_{E2} is returned. As explained above, R_{E2} may be an index to an entry in an ingress stream table. Optionally, R_{E2} may define or comprise instructions indicating how to respond to the input identified by the exact match key.

If a matching exact match key K_{E2} is not contained in EM Table 2 (i.e. no match is found) then, if one was found, the best match TCAM entry is the best match, and the result R_{T} associated with this entry is returned. If no best match TCAM entry was found, then the default output result is returned.

The present disclosure therefore describes a computer-implemented method of determining a best match for an input using a TCAM table and at least one Exact match table. Each exact match table has an assigned precedence value and each TCAM entry in the TCAM table has an assigned precedence value. The TCAM lookup keys and exact match lookup keys are constructed independently based on the input frame and meta data. A TCAM lookup is performed first and the output precedence value of the best match TCAM entry is compared to the exact match table(s) precedence value(s). If the precedence value of any of the EM tables is less than the best match TCAM entry precedence value, the lowest precedence EM lookup is executed first, followed by any subsequence EM table lookups until a match is found.

If a matching exact match entry is found, then the exact match entry is the best match and the associated output data is returned, otherwise, the output data associated with the best match TCAM entry is returned.

If no matching TCAM entry or matching exact match entry is found, then a default output may be returned.

Thus, the present disclosure is not limited to performing an exact match lookup first followed by a TCAM lookup if no exact match is found, which is generally only useful for certain applications. Instead, in the present disclosure the exact match table can be assigned a precedence value that has any value relative to the precedence of the TCAM entries. In addition, more than one exact match table can be provided, wherein each exact match table may have a different precedence value. As such, in the present disclosure, the order in which the lookups are performed, and the number of different exam match lookups, can be tailored to the data (i.e. to the application use). This improves the efficiency of the lookup process, whilst also reducing the TCAM usage. The present application is also not limited in terms of what data can be contained in the TCAM table or the exact match table(s).

## Claims

1. A computer-implemented method of determining a best match for an input, comprising:
providing a Ternary Content Addressable Memory, TCAM, table, storing a plurality of TCAM entries, wherein each TCAM entry has an associated output result and each TCAM entry is assigned a precedence value;
providing an exact match table, wherein the exact match table stores a plurality of exact match keys, wherein each exact match key has an associated output result and the exact match table is assigned a precedence value;
receiving the input;
generating a TCAM lookup key from the input;
performing a TCAM lookup using the TCAM lookup key to determine a best match TCAM entry;
comparing the precedence value of the best match TCAM entry to the precedence value of the exact match table;
in response to determining that the precedence value of the exact match table is less than the precedence value of the best match TCAM entry, performing an exact match lookup process, including:
generating an exact match lookup key from the input; and
using the exact match lookup key to determine if a matching exact match key is contained in the exact match table; and
if no matching exact match key is identified, returning the output result associated with the best match TCAM entry as the best match; and if a matching exact match key is identified, returning the output result associated with the matching exact match key as the best match; and wherein the precedence value assigned to each TCAM entry is defined relative to the precedence value assigned to the, or each, exact match table.

2. The computer-implemented method of claim 1, further comprising:
providing a plurality of exact match tables, wherein each exact match key stored in the plurality of exact match tables has an associated output result, and each exact match table is assigned a precedence value;
comparing the precedence value of the best match TCAM entry to the precedence value of each exact match table; and
in response to determining that the precedence value of one of the plurality of exact match tables is less than the precedence value of the best match TCAM entry,
performing the exact match lookup process.

3. The computer-implemented method of claim 2, wherein in response to determining that the precedence value of two or more of the plurality of exact match tables is less than the precedence value of the best match TCAM entry, the method comprises:
determining which of the two or more exact match tables has the lowest precedence value;
performing an exact match lookup process by:
generating a first exact match lookup key from the input, for the exact match table with the lowest precedence value; and
using the first exact match lookup key to determine if a matching exact match key is contained in the exact match table with the lowest precedence value;
in response to no matching exact match key being identified, repeating the exact match lookup process for each of the two or more exact match tables in order of lowest precedence value to highest precedence value until a matching exact match key is identified, and
if a matching exact match key is identified, returning the output result associated with the matching exact match key as the best match; and
if no matching exact match key is identified in the two or more exact match tables, returning the output result associated with the best match TCAM entry as the best match.

4. The computer-implemented method of any preceding claim, wherein, in response to determining that the precedence value of the best match TCAM entry is less than the precedence value of the, or each, exact match table, the output result associated with the best match TCAM entry is returned as the best match.

5. The computer-implemented method of any preceding claim, wherein if no best match TCAM entry is identified and no matching exact match key is identified then a default output result is returned; or
wherein the TCAM table comprises a default entry having an associated default output result, and the default entry is assigned the highest precedence value, such that the default entry is determined to be the best match TCAM entry if no matching TCAM entry having a lower precedence value is identified.

6. A non-transitory computer-readable medium comprising executable instructions to cause one or more processors to perform the method of any preceding claim.

7. An integrated circuit, comprising:
a processor; and
memory, the memory configured to store:
a Ternary Content Addressable Memory, TCAM, table, configured to store a plurality of TCAM entries, wherein each TCAM entry has an associated output result and each TCAM entry is assigned a precedence value; and
an exact match table, wherein the exact match table is configured to store a plurality of exact match keys, wherein each exact match key has an associated output result and the exact match table is assigned a precedence value; and
a set of executable instructions to cause the processor to perform a method to determine a best match for an input, wherein the method comprises:
receiving the input;
generating a TCAM lookup key from the input;
performing a TCAM lookup using the TCAM lookup key to determine a best match TCAM entry in the TCAM table;
comparing the precedence value of the best match TCAM entry to the precedence value of the exact match table;
in response to determining that the precedence value of the exact match table is less than the precedence value of the best match TCAM entry, performing an exact match lookup process, including:
generating an exact match lookup key from the input; and
using the exact match lookup key to determine if a matching exact match key is contained in the exact match table;
wherein, if no matching exact match key is identified, the output result associated with the best match TCAM entry is returned as the best match; and
wherein, if a matching exact match key is identified, the output result
associated with the matching exact match key is returned as the best match; and wherein the precedence value assigned to each TCAM entry is defined relative to the precedence value assigned to the, or each, exact match table.

8. The integrated circuit of claim 7, further comprising a plurality of exact match tables, wherein each exact match key stored in the plurality of exact match tables has an associated output result, and each exact match table is assigned a precedence value, wherein the method further comprises:
comparing the precedence value of the best match TCAM entry to the precedence value of each exact match table; and
in response to determining that the precedence value of one of the plurality of exact match tables is less than the precedence value of the best match TCAM entry, performing the exact match lookup process.

9. The integrated circuit of claim 8, wherein in response to determining that the precedence value of two or more of the plurality of exact match tables is less than the precedence value of the best match TCAM entry, the method further comprises:
determining which of the two or more exact match tables has the lowest precedence value;
performing an exact match lookup process by:
generating a first exact match lookup key from the input, for the exact match table with the lowest precedence value; and
using the first exact match lookup key to determine if a matching exact match key is contained in the exact match table with the lowest precedence value;
wherein, if no matching exact match key is identified, the exact match lookup process is repeated for each of the two or more exact match tables in order of lowest precedence value to highest precedence value until a matching exact match key is identified,
wherein if a matching exact match key is identified then the output result associated with the matching exact match key is returned as the best match; and
wherein if no matching exact match key is identified in the two or more exact match tables, the output result associated with the best match TCAM entry is returned as the best match.

10. The integrated circuit of any of claims 7 to 9, wherein, in response to determining that the precedence value of the best match TCAM entry is less than the precedence value of the, or each, exact match table, returning the output result associated with the best match TCAM entry as the best match.

11. The integrated circuit of any of claims 7 to 10, wherein the memory comprises a default output result, wherein if no best match TCAM entry is identified and no matching exact match key is identified, returning the default output result; or wherein the TCAM table comprises a default entry having an associated default output result, and the default entry is assigned the highest precedence value, such that the default entry is determined to be the best match TCAM entry if no matching TCAM entry having a lower precedence value is identified.

12. The integrated circuit of any of claims 7 to 11, wherein an ingress stream table is stored in the memory, and each output result associated with each TCAM entry, and each output result associated with each exact match key, comprises an index to an entry in the ingress stream table.

13. The integrated circuit of any of claims 7 to 12, wherein each TCAM entry comprises a key and a mask of identical size, and/or wherein the input comprises a frame and metadata.

## Patentansprüche

1. Computerimplementiertes Verfahren zum Bestimmen einer besten Übereinstimmung für eine Eingabe, das umfasst:
Bereitstellen einer Tabelle eines ternären inhaltsadressierbaren Speichers, TCAM-Tabelle, die eine Vielzahl von TCAM-Einträgen speichert, wobei jeder TCAM-Eintrag ein zugehöriges Ausgabeergebnis aufweist und jedem TCAM-Eintrag ein Vorrangwert zugewiesen wird;
Bereitstellen einer Tabelle einer exakten Übereinstimmung, wobei die Tabelle einer exakten Übereinstimmung eine Vielzahl von Schlüsseln einer exakten Übereinstimmung speichert, wobei jeder Schlüssel einer exakten Übereinstimmung ein zugehöriges Ausgabeergebnis aufweist und der Tabelle einer exakten Übereinstimmung ein Vorrangwert zugewiesen wird;
Empfangen der Eingabe;
Erzeugen eines TCAM-Suchschlüssels aus der Eingabe;
Durchführen einer TCAM-Suche unter Verwendung des TCAM-Suchschlüssels, um einen TCAM-Eintrag mit der besten Übereinstimmung zu bestimmen;
Vergleichen des Vorrangwerts des TCAM-Eintrags mit der besten Übereinstimmung mit dem Vorrangwert der Tabelle einer exakten Übereinstimmung;
als Reaktion auf das Bestimmen, dass der Vorrangwert der Tabelle einer exakten Übereinstimmung kleiner als der Vorrangwert des TCAM-Eintrags mit der besten Übereinstimmung ist, Durchführen eines Suchprozesses einer exakten Übereinstimmung, das einschließt:
Erzeugen eines Suchschlüssels einer exakten Übereinstimmung aus der Eingabe und
Verwenden des Suchschlüssels einer exakten Übereinstimmung, um zu bestimmen, ob ein übereinstimmender Schlüssel einer exakten Übereinstimmung in der Tabelle einer exakten Übereinstimmung enthalten ist; und
wenn kein übereinstimmender Schlüssel einer exakten Übereinstimmung identifiziert wird, Zurückgeben des Ausgabeergebnisses, das dem TCAM-Eintrag mit der besten Übereinstimmung zugeordnet ist, als die beste Übereinstimmung und
wenn ein übereinstimmender Schlüssel einer exakten Übereinstimmung identifiziert wird, Zurückgeben des Ausgabeergebnisses, das dem übereinstimmenden Schlüssel einer exakten Übereinstimmung zugeordnet ist, als die beste Übereinstimmung; und wobei der Vorrangwert, der jedem TCAM-Eintrag zugewiesen wird, relativ zum Vorrangwert, der der oder jeder Tabelle einer exakten Übereinstimmung zugewiesen wird, definiert ist.

2. Computerimplementiertes Verfahren nach Anspruch 1, das ferner umfasst:
Bereitstellen einer Vielzahl von Tabellen einer exakten Übereinstimmung, wobei jeder Schlüssel einer exakten Übereinstimmung, der in der Vielzahl von Tabellen einer exakten Übereinstimmung gespeichert ist, ein zugehöriges Ausgabeergebnis aufweist und jeder Tabelle einer exakten Übereinstimmung ein Vorrangwert zugewiesen wird;
Vergleichen des Vorrangwerts des TCAM-Eintrags mit der besten Übereinstimmung mit dem Vorrangwert jeder Tabelle einer exakten Übereinstimmung und
als Reaktion auf das Bestimmen, dass der Vorrangwert einer der Vielzahl von Tabellen einer exakten Übereinstimmung kleiner als der Vorrangwert des TCAM-Eintrags mit der besten Übereinstimmung ist, Durchführen des Suchprozesses einer exakten Übereinstimmung.

3. Computerimplementiertes Verfahren nach Anspruch 2, wobei, als Reaktion auf das Bestimmen, dass der Vorrangwert von zwei oder mehr der Vielzahl von Tabellen einer exakten Übereinstimmung kleiner als der Vorrangwert des TCAM-Eintrags mit der besten Übereinstimmung ist, das Verfahren umfasst:
Bestimmen, welche der zwei oder mehr Tabellen einer exakten Übereinstimmung den niedrigsten Vorrangwert aufweist;
Durchführen eines Suchprozesses einer exakten Übereinstimmung durch:
Erzeugen eines ersten Suchschlüssels einer exakten Übereinstimmung aus der Eingabe für die Tabelle einer exakten Übereinstimmung mit dem niedrigsten Vorrangwert und
Verwenden des ersten Suchschlüssels einer exakten Übereinstimmung, um zu bestimmen, ob ein übereinstimmender Schlüssel einer exakten Übereinstimmung in der Tabelle einer exakten Übereinstimmung mit dem niedrigsten Vorrangwert enthalten ist;
als Reaktion darauf, dass kein übereinstimmender Schlüssel einer exakten Übereinstimmung identifiziert wird, Wiederholen des Suchprozesses einer exakten Übereinstimmung für jede der zwei oder mehr Tabellen einer exakten Übereinstimmung in der Reihenfolge vom niedrigsten Vorrangwert zum höchsten Vorrangwert, bis ein übereinstimmender Schlüssel einer exakten Übereinstimmung identifiziert wird, und
wenn ein übereinstimmender Schlüssel einer exakten Übereinstimmung identifiziert wird, Zurückgeben des Ausgabeergebnisses, das dem übereinstimmenden Schlüssel einer exakten Übereinstimmung zugeordnet ist, als die beste Übereinstimmung und
wenn kein übereinstimmender Schlüssel einer exakten Übereinstimmung in den zwei oder mehr Tabellen einer exakten Übereinstimmung identifiziert wird, Zurückgeben des Ausgabeergebnisses, das dem TCAM-Eintrag mit der besten Übereinstimmung zugeordnet ist, als die beste Übereinstimmung.

4. Computerimplementiertes Verfahren nach einem der vorhergehenden Ansprüche, wobei, als Reaktion auf das Bestimmen, dass der Vorrangwert des TCAM-Eintrags mit der besten Übereinstimmung kleiner als der Vorrangwert der oder jeder Tabelle einer exakten Übereinstimmung ist, das Ausgabeergebnis, das dem TCAM-Eintrag mit der besten Übereinstimmung zugeordnet ist, als die beste Übereinstimmung zurückgegeben wird.

5. Computerimplementiertes Verfahren nach einem der vorhergehenden Ansprüche, wobei, wenn kein TCAM-Eintrag mit der besten Übereinstimmung identifiziert wird und kein übereinstimmender Schlüssel einer exakten Übereinstimmung identifiziert wird, ein Standardausgabeergebnis zurückgegeben wird oder
wobei die TCAM-Tabelle einen Standardeintrag mit einem zugehörigen Standardausgabeergebnis umfasst und dem Standardeintrag der höchste Vorrangwert zugewiesen wird, sodass bestimmt wird, dass der Standardeintrag der TCAM-Eintrag mit der besten Übereinstimmung ist, wenn kein übereinstimmender TCAM-Eintrag mit einem niedrigeren Vorrangwert identifiziert wird.

6. Nicht transitorisches computerlesbares Medium, das ausführbare Anweisungen umfasst, um einen oder mehrere Prozessoren zu veranlassen, das Verfahren nach einem der vorhergehenden Ansprüche durchzuführen.

7. Integrierte Schaltung, die umfasst:
einen Prozessor und
Speicher, wobei der Speicher konfiguriert ist zum Speichern:
einer Tabelle eines ternären inhaltsadressierbaren Speichers, TCAM-Tabelle, die konfiguriert ist, um eine Vielzahl von TCAM-Einträgen zu speichern, wobei jeder TCAM-Eintrag ein zugehöriges Ausgabeergebnis aufweist und jedem TCAM-Eintrag ein Vorrangwert zugewiesen wird; und
einer Tabelle einer exakten Übereinstimmung, wobei die Tabelle einer exakten Übereinstimmung konfiguriert ist, um eine Vielzahl von Schlüsseln einer exakten Übereinstimmung zu speichern, wobei jeder Schlüssel einer exakten Übereinstimmung ein zugehöriges Ausgabeergebnis aufweist und der Tabelle einer exakten Übereinstimmung ein Vorrangwert zugewiesen wird; und
einen Satz ausführbarer Anweisungen, um den Prozessor zu veranlassen, ein Verfahren durchzuführen, um eine beste Übereinstimmung für eine Eingabe zu bestimmen, wobei das Verfahren umfasst:
Empfangen der Eingabe;
Erzeugen eines TCAM-Suchschlüssels aus der Eingabe;
Durchführen einer TCAM-Suche unter Verwendung des TCAM-Suchschlüssels, um einen TCAM-Eintrag mit der besten Übereinstimmung in der TCAM-Tabelle zu bestimmen;
Vergleichen des Vorrangwerts des TCAM-Eintrags mit der besten Übereinstimmung mit dem Vorrangwert der Tabelle einer exakten Übereinstimmung;
als Reaktion auf das Bestimmen, dass der Vorrangwert der Tabelle einer exakten Übereinstimmung kleiner als der Vorrangwert des TCAM-Eintrags mit der besten Übereinstimmung ist, Durchführen eines Suchprozesses einer exakten Übereinstimmung, das einschließt:
Erzeugen eines Suchschlüssels einer exakten Übereinstimmung aus der Eingabe und
Verwenden des Suchschlüssels einer exakten Übereinstimmung, um zu bestimmen, ob ein übereinstimmender Schlüssel einer exakten Übereinstimmung in der Tabelle einer exakten Übereinstimmung enthalten ist;
wobei, wenn kein übereinstimmender Schlüssel einer exakten Übereinstimmung identifiziert wird, das Ausgabeergebnis, das dem TCAM-Eintrag mit der besten Übereinstimmung zugeordnet ist, als die beste Übereinstimmung zurückgegeben wird und
wobei, wenn ein übereinstimmender Schlüssel einer exakten Übereinstimmung identifiziert wird, das Ausgabeergebnis, das dem übereinstimmenden Schlüssel einer exakten Übereinstimmung zugeordnet ist, als die beste Übereinstimmung zurückgegeben wird; und wobei der Vorrangwert, der jedem TCAM-Eintrag zugewiesen wird, relativ zum Vorrangwert, der der oder jeder Tabelle einer exakten Übereinstimmung zugewiesen wird, definiert ist.

8. Integrierte Schaltung nach Anspruch 7, ferner umfassend eine Vielzahl von Tabellen einer exakten Übereinstimmung, wobei jeder Schlüssel einer exakten Übereinstimmung, der in der Vielzahl von Tabellen einer exakten Übereinstimmung gespeichert ist, ein zugehöriges Ausgabeergebnis aufweist und jeder Tabelle einer exakten Übereinstimmung ein Vorrangwert zugewiesen wird, wobei das Verfahren ferner umfasst:
Vergleichen des Vorrangwerts des TCAM-Eintrags mit der besten Übereinstimmung mit dem Vorrangwert jeder Tabelle einer exakten Übereinstimmung und
als Reaktion auf das Bestimmen, dass der Vorrangwert einer der Tabellen einer exakten Übereinstimmung kleiner als der Vorrangwert des TCAM-Eintrags mit der besten Übereinstimmung ist, Durchführen des Suchprozesses einer exakten Übereinstimmung.

9. Integrierte Schaltung nach Anspruch 8, wobei, als Reaktion auf das Bestimmen, dass der Vorrangwert von zwei oder mehr der Vielzahl von Tabellen einer exakten Übereinstimmung kleiner als der Vorrangwert des TCAM-Eintrags mit der besten Übereinstimmung ist, das Verfahren ferner umfasst:
Bestimmen, welche der zwei oder mehr Tabellen einer exakten Übereinstimmung den niedrigsten Vorrangwert aufweist;
Durchführen eines Suchprozesses einer exakten Übereinstimmung durch:
Erzeugen eines ersten Suchschlüssels einer exakten Übereinstimmung aus der Eingabe für die Tabelle einer exakten Übereinstimmung mit dem niedrigsten Vorrangwert und
Verwenden des ersten Suchschlüssels einer exakten Übereinstimmung, um zu bestimmen, ob ein übereinstimmender Schlüssel einer exakten Übereinstimmung in der Tabelle einer exakten Übereinstimmung mit dem niedrigsten Vorrangwert enthalten ist;
wobei, wenn kein übereinstimmender Schlüssel einer exakten Übereinstimmung identifiziert wird, der Suchprozess einer exakten Übereinstimmung für jede der zwei oder mehr Tabellen einer exakten Übereinstimmung in der Reihenfolge vom niedrigsten Vorrangwert zum höchsten Vorrangwert wiederholt wird, bis ein übereinstimmender Schlüssel einer exakten Übereinstimmung identifiziert wird,
wobei, wenn ein übereinstimmender Schlüssel einer exakten Übereinstimmung identifiziert wird, das Ausgabeergebnis, das dem übereinstimmenden Schlüssel einer exakten Übereinstimmung zugeordnet ist, als die beste Übereinstimmung zurückgegeben wird und
wobei, wenn kein übereinstimmender Schlüssel einer exakten Übereinstimmung in den zwei oder mehr Tabellen einer exakten Übereinstimmung identifiziert wird, das Ausgabeergebnis, das dem TCAM-Eintrag mit der besten Übereinstimmung zugeordnet ist, als die beste Übereinstimmung zurückgegeben wird.

10. Integrierte Schaltung nach einem der Ansprüche 7 bis 9, wobei, als Reaktion auf das Bestimmen, dass der Vorrangwert des TCAM-Eintrags mit der besten Übereinstimmung kleiner als der Vorrangwert der oder jeder Tabelle einer exakten Übereinstimmung ist, das Ausgabeergebnis, das dem TCAM-Eintrag mit der besten Übereinstimmung zugeordnet ist, als die beste Übereinstimmung zurückgegeben wird.

11. Integrierte Schaltung nach einem der Ansprüche 7 bis 10, wobei der Speicher ein Standardausgabeergebnis umfasst, wobei, wenn kein TCAM-Eintrag mit der besten Übereinstimmung identifiziert wird und kein übereinstimmender Schlüssel einer exakten Übereinstimmung identifiziert wird, das Standardausgabeergebnis zurückgegeben wird oder
wobei die TCAM-Tabelle einen Standardeintrag mit einem zugehörigen Standardausgabeergebnis umfasst und dem Standardeintrag der höchste Vorrangwert zugewiesen wird, sodass bestimmt wird, dass der Standardeintrag der TCAM-Eintrag mit der besten Übereinstimmung ist, wenn kein übereinstimmender TCAM-Eintrag mit einem niedrigeren Vorrangwert identifiziert wird.

12. Integrierte Schaltung nach einem der Ansprüche 7 bis 11, wobei eine Eingangsstromtabelle im Speicher gespeichert ist und jedes Ausgabeergebnis, das jedem TCAM-Eintrag zugeordnet ist und jedes Ausgabeergebnis, das jedem Schlüssel einer exakten Übereinstimmung zugeordnet ist, einen Index für einen Eintrag in der Eingangsstromtabelle umfasst.

13. Integrierte Schaltung nach einem der Ansprüche 7 bis 12, wobei jeder TCAM-Eintrag einen Schlüssel und eine Maske identischer Größe umfasst und/oder wobei die Eingabe einen Rahmen und Metadaten umfasst.

## Revendications

1. Procédé mis en œuvre par ordinateur pour déterminer la meilleure correspondance pour une entrée, le procédé comprenant les étapes suivantes :
fournir une table de mémoire ternaire adressable par le contenu, TCAM, stockant une pluralité d'entrées TCAM, chaque entrée TCAM ayant un résultat de sortie associé et chaque entrée TCAM se voyant attribuer une valeur de priorité ;
fournir une table de correspondance exacte, où la table de correspondance exacte stocke une pluralité de clés de correspondance exacte, où chaque clé de correspondance exacte a un résultat de sortie associé et une valeur de priorité est attribuée à la table de correspondance exacte ;
recevoir l'entrée ;
générer une clé de recherche TCAM à partir de l'entrée ; effectuer une recherche de la TCAM à l'aide de la clé de recherche de la TCAM pour déterminer l'entrée de la TCAM ayant la meilleure correspondance ;
comparer la valeur de priorité de l'entrée TCAM ayant la meilleure correspondance à la valeur de priorité de la table de correspondance exacte ;
en réponse à la détermination que la valeur de priorité de la table de correspondance exacte est inférieure à la valeur de priorité de l'entrée TCAM ayant la meilleure correspondance, exécuter un processus de recherche de correspondance exacte, y compris :
générer une clé de recherche de correspondance exacte à partir de l'entrée ; et
utiliser la clé de recherche de correspondance exacte pour déterminer si une clé de correspondance exacte correspondante est contenue dans la table de correspondance exacte ; et
si aucune clé de correspondance exacte correspondante n'est identifiée, renvoyer le résultat de sortie associé à l'entrée TCAM ayant la meilleure correspondance en tant que meilleure correspondance ; et
si une clé de correspondance exacte correspondante est identifiée, renvoyer le résultat de sortie associé à la clé de correspondance exacte correspondante comme étant la meilleure correspondance ; et, où la valeur de priorité attribuée à chaque entrée TCAM est définie par rapport à la valeur de priorité attribuée à la, ou à chaque, table de correspondance exacte.

2. Procédé mis en œuvre par ordinateur selon la revendication 1, comprenant en outre les étapes suivantes :
fournir une pluralité de tables de correspondance exacte, où chaque clé de correspondance exacte stockée dans la pluralité de tables de correspondance exacte a un résultat de sortie associé, et chaque table de correspondance exacte se voit attribuer une valeur de priorité ;
comparer la valeur de priorité de l'entrée TCAM ayant la meilleure correspondance à la valeur de priorité de chaque table de correspondance exacte ; et
en réponse à la détermination que la valeur de priorité de l'une de la pluralité de tables de correspondance exacte est inférieure à la valeur de priorité de l'entrée TCAM ayant la meilleure correspondance,
exécuter le processus de recherche de correspondance exacte.

3. Procédé mis en œuvre par ordinateur selon la revendication 2, dans lequel, en réponse à la détermination que la valeur de priorité de deux, ou plus, de la pluralité de tables de correspondance exacte est inférieure à la valeur de priorité de l'entrée TCAM ayant la meilleure correspondance, le procédé comprend les étapes suivantes :
déterminer laquelle des deux tables de correspondance exacte, ou plus, a la valeur de priorité la plus basse ;
exécuter un processus de recherche de correspondance exacte :
en générant une première clé de recherche de correspondance exacte à partir de l'entrée, pour la table de correspondance exacte ayant la valeur de priorité la plus basse ; et
en utilisant la première clé de recherche de correspondance exacte pour déterminer si une clé de correspondance exacte correspondante est contenue dans la table de correspondance exacte ayant la valeur de priorité la plus basse ;
si aucune clé de correspondance exacte correspondante n'est identifiée, répéter le processus de recherche de correspondance exacte pour chacune des deux tables de correspondance exacte, ou plus, dans l'ordre de la valeur de priorité la plus faible à la valeur de priorité la plus élevée, jusqu'à ce qu'une clé de correspondance exacte correspondante soit identifiée, et
si une clé de correspondance exacte correspondante est identifiée, renvoyer le résultat de sortie associé à la clé de correspondance exacte correspondante comme étant la meilleure correspondance ; et
si aucune clé de correspondance exacte correspondante n'est identifiée dans les deux, ou plus, tables de correspondance exacte, renvoyer le résultat de sortie associé à l'entrée TCAM ayant la meilleure correspondance comme étant la meilleure correspondance.

4. Procédé mis en œuvre par ordinateur selon l'une quelconque des revendications précédentes, dans lequel, en réponse à la détermination que la valeur de priorité de l'entrée TCAM ayant la meilleure correspondance est inférieure à la valeur de priorité de la, ou de chaque, table de correspondance exacte, le résultat de sortie associé à l'entrée TCAM ayant la meilleure correspondance est renvoyé en tant que meilleure correspondance.

5. Procédé mis en œuvre par ordinateur selon l'une quelconque des revendications précédentes, dans lequel, si aucune entrée TCAM de meilleure correspondance n'est identifiée et si aucune clé de correspondance exacte n'est identifiée, un résultat de sortie par défaut est renvoyé ; ou
dans lequel la table TCAM comprend une entrée par défaut à laquelle est associé un résultat de sortie par défaut, et l'entrée par défaut se voit attribuer la valeur de priorité la plus élevée, de sorte que l'entrée par défaut est déterminée comme étant l'entrée TCAM ayant la meilleure correspondance si aucune entrée TCAM correspondante ayant une valeur de priorité inférieure n'est identifiée.

6. Support non transitoire lisible par ordinateur comprenant des instructions exécutables pour amener un ou plusieurs processeurs à exécuter le procédé selon l'une quelconque des revendications précédentes.

7. Circuit intégré comprenant :
un processeur ; et
une mémoire, la mémoire étant configurée pour stocker : une table de mémoire ternaire adressable par le contenu, TCAM, configurée pour stocker une pluralité d'entrées TCAM, chaque entrée TCAM ayant un résultat de sortie associé et chaque entrée TCAM se voyant attribuer une valeur de priorité ; et
une table de correspondance exacte, où la table de correspondance exacte est configurée pour stocker une pluralité de clés de correspondance exacte, où chaque clé de correspondance exacte a un résultat de sortie associé et une valeur de priorité est attribuée à la table de correspondance exacte ; et
un ensemble d'instructions exécutables pour amener le processeur à exécuter un procédé pour déterminer la meilleure correspondance pour une entrée, où le procédé comprend les étapes suivantes :
recevoir l'entrée ;
générer une clé de recherche TCAM à partir de l'entrée ; effectuer une recherche dans la TCAM à l'aide de la clé de recherche de TCAM pour déterminer l'entrée de la TCAM ayant la meilleure correspondance dans la table TCAM ; comparer la valeur de priorité de l'entrée TCAM ayant la meilleure correspondance à la valeur de priorité de la table de correspondance exacte ;
en réponse à la détermination que la valeur de priorité de la table de correspondance exacte est inférieure à la valeur de priorité de l'entrée TCAM ayant la meilleure correspondance, exécuter un processus de recherche de correspondance exacte, y compris :
générer une clé de recherche de correspondance exacte à partir de l'entrée ; et
utiliser la clé de recherche de correspondance exacte pour déterminer si une clé de correspondance exacte correspondante est contenue dans la table de correspondance exacte ;
où, si aucune clé de correspondance exacte correspondante n'est identifiée, le résultat de sortie associé à l'entrée TCAM ayant la meilleure correspondance est retourné en tant que meilleure correspondance ; et
où, si une clé de correspondance exacte correspondante est identifiée, le résultat de sortie associé à la clé de correspondance exacte correspondante est renvoyé en tant que meilleure correspondance ; et où la valeur de priorité attribuée à chaque entrée TCAM est définie par rapport à la valeur de priorité attribuée à la, ou à chaque, table de correspondance exacte.

8. Circuit intégré selon la revendication 7, comprenant en outre une pluralité de tables de correspondance exacte, où chaque clé de correspondance exacte stockée dans la pluralité de tables de correspondance exacte a un résultat de sortie associé, et chaque table de correspondance exacte se voit attribuer une valeur de priorité, où le procédé comprend en outre les étapes suivantes :
comparer la valeur de priorité de l'entrée TCAM ayant la meilleure correspondance à la valeur de priorité de chaque table de correspondance exacte ; et
en réponse à la détermination que la valeur de priorité de l'une de la pluralité de tables de correspondance exacte est inférieure à la valeur de priorité de l'entrée TCAM ayant la meilleure correspondance, exécuter le processus de recherche de correspondance exacte.

9. Circuit intégré selon la revendication 8, dans lequel, en réponse à la détermination que la valeur de priorité de deux tables, ou plus, de la pluralité de tables de correspondance exacte est inférieure à la valeur de priorité de l'entrée TCAM ayant la meilleure correspondance, le procédé comprend en outre les étapes suivantes :
déterminer laquelle des deux tables de correspondance exacte, ou plus, a la valeur de priorité la plus basse ; exécuter un processus de recherche de correspondance exacte :
en générant une première clé de recherche de correspondance exacte à partir de l'entrée, pour la table de correspondance exacte ayant la valeur de priorité la plus basse ; et
en utilisant la première clé de recherche de correspondance exacte pour déterminer si une clé de correspondance exacte correspondante est contenue dans la table de correspondance exacte ayant la valeur de priorité la plus basse ;
où, si aucune clé de correspondance exacte n'est identifiée, le processus de recherche de correspondance exacte est répété pour chacune des deux tables de correspondance exacte, ou plus, dans l'ordre de la valeur de priorité la plus faible à la valeur de priorité la plus élevée, jusqu'à ce qu'une clé de correspondance exacte correspondante soit identifiée,
où, si une clé de correspondance exacte correspondante est identifiée, alors le résultat de sortie associé à la clé de correspondance exacte correspondante est renvoyé en tant que meilleure correspondance ; et
où, si aucune clé de correspondance exacte correspondante n'est identifiée dans les deux, ou plus, tables de correspondance exacte, le résultat de sortie associé à l'entrée TCAM ayant la meilleure correspondance est renvoyé en tant que meilleure correspondance.

10. Circuit intégré selon l'une quelconque des revendications 7 à 9, dans lequel, en réponse à la détermination que la valeur de priorité de l'entrée TCAM ayant la meilleure correspondance est inférieure à la valeur de priorité de la, ou de chaque, table de correspondance exacte, le résultat de sortie associé à l'entrée TCAM ayant la meilleure correspondance est renvoyé comme étant la meilleure correspondance.

11. Circuit intégré selon l'une quelconque des revendications 7 à 10, dans lequel la mémoire comprend un résultat de sortie par défaut où, si aucune entrée TCAM ayant la meilleure correspondance n'est identifiée et qu'aucune clé de correspondance exacte correspondante n'est identifiée, le résultat de sortie par défaut est renvoyé ; ou
dans lequel la table TCAM comprend une entrée par défaut à laquelle est associé un résultat de sortie par défaut, et l'entrée par défaut se voit attribuer la valeur de priorité la plus élevée, de sorte que l'entrée par défaut est déterminée comme étant l'entrée TCAM ayant la meilleure correspondance si aucune entrée TCAM correspondante ayant une valeur de priorité inférieure n'est identifiée.

12. Circuit intégré selon l'une quelconque des revendications 7 à 11, dans lequel une table de flux d'entrée est stockée dans la mémoire, et chaque résultat de sortie associé à chaque entrée TCAM, et chaque résultat de sortie associé à chaque clé de correspondance exacte, comprend un index d'une entrée dans la table de flux d'entrée.

13. Circuit intégré selon l'une quelconque des revendications 7 à 12, dans lequel chaque entrée TCAM comprend une clé et un masque de taille identique, et/ou dans lequel l'entrée comprend une trame et des métadonnées.
